# EUROPEAN PATENT APPLICATION

(11) **EP 4 641 268 A1**
(43) Date of publication of application: **29.10.2025**
(21) Application number: 23936411.0
(22) Date of filing: 09.11.2023
(51) Int. Cl.: G02B 6/00, G02B 27/01

(54) **MANUFACTURING METHOD FOR TWO-DIMENSIONAL PUPIL-EXPANDING HOLOGRAPHIC OPTICAL WAVEGUIDE SHEET, OPTICAL WAVEGUIDE SHEET, AND AR GLASSES**

(30) Priority: 08.05.2023 CN 202310505201
(71) Applicant: Nanchang Virtual Reality Research Institute Co., Ltd., Nanchang, Jiangxi 330013 (CN)
(72) Inventor: YANG, Song, Nanchang, Jiangxi 330013 (CN); NI, Mingli, Nanchang, Jiangxi 330013 (CN)
(74) Representative: Metida
(86) International application number: PCT/CN2023/130833
(87) International publication number: WO 2024/230107

(57) **Abstract**

An embodiment of the present application provides a preparation method of a two-dimensional pupil expansion holographic waveguide sheet, a waveguide sheet, and AR glasses. A beam splitter and a reflector are arranged with centers thereof on the same straight line, and a prism is disposed below the beam splitter. A first beam-splitting member is disposed between the beam splitter and a prism, where reflected light from the beam splitter is split by the first beam-splitting member and normally incident on the upper surface of the prism and a first slanted face of the prism side, and transmitted light passing through the beam splitter is reflected by the reflector and normally incident on a second slanted face of the prism side. The exposure member is selectively exposed to the light normally incident on the prism to prepare the two-dimensional pupil expansion holographic waveguide sheet.

## Description

### TECHNICAL FIELD

Embodiments of the present application pertain to the field of AR technology, and specifically relate to a preparation method of a two-dimensional pupil expansion holographic waveguide sheet, a waveguide sheet, and AR glasses.

### BACKGROUND

To ensure a good visual experience for users, holographic waveguide sheets must possess two-dimensional pupil expansion functionality to increase the eye movement range in both directions. In the preparation of two-dimensional pupil expansion holographic waveguide sheets, three gratings need to be prepared on a single waveguide sheet: an in-coupling grating, a turning grating, and an out-coupling grating, each requiring different preparation methods. Existing preparation methods for two-dimensional pupil expansion holographic waveguide sheets involve setting up three exposure optical paths and performing three exposures on a single waveguide sheet to sequentially form the three gratings, thereby completing the preparation of the two-dimensional pupil expansion holographic waveguide sheet. Such preparation schemes require constructing three optical paths, resulting in cumbersome procedures and low preparation efficiency. Multiple exposures during the process may interfere with each other, reducing the yield of grating preparation.

### SUMMARY

To address or mitigate technical problems in the prior art, embodiments of the present application provide a preparation method of a two-dimensional pupil expansion holographic waveguide sheet, which enables preparation of a two-dimensional pupil expansion holographic waveguide sheet by setting up a single optical path, effectively improving preparation efficiency and product yield.

According to a first aspect, an embodiment of the present application provides a preparation method of a two-dimensional pupil expansion holographic waveguide sheet, the method including:
arranging a beam splitter and a reflector with centers thereof on a same straight line, and disposing a prism below the beam splitter, where a front face and a bottom face of the prism are planar structures and parallel to each other, side faces of the prism are slanted structures, and an exposure member is disposed at the bottom of the prism;
disposing a first beam-splitting member between the beam splitter and the prism, where reflected light from the beam splitter is split by the first beam-splitting member and normally incident on an upper surface of the prism and a first slanted face of a prism side, and transmitted light passing through the beam splitter is reflected by the reflector and normally incident on a second slanted face of a prism side; and
selectively exposing the exposure member to light normally incident on the prism to prepare the two-dimensional pupil expansion holographic waveguide sheet.

In a preferred embodiment of the present application, the method further includes:
disposing a second beam-splitting member between the reflector and the prism; and
splitting, by the second beam-splitting member, light reflected by the reflector to be normally incident on the second slanted face of the prism side.

In a preferred embodiment of the present application, the first beam-splitting member splits the light into a first beam and a second beam, the light reflected by the reflector is a third beam, the first beam is normally incident on the upper surface of the prism, the first beam is normally incident on the first slanted face of the prism side, and the third beam is normally incident on the second slanted face of the prism side.

In a preferred embodiment of the present application, the selectively exposing the exposure member to light normally incident on the prism to prepare the two-dimensional pupil expansion holographic waveguide sheet includes:
blocking the second beam, and exposing the exposure member to the first beam and the third beam passing through the prism to prepare an in-coupling grating;
blocking the first beam, exposing the exposure member to the second beam and the third beam passing through the prism, and adjusting a position of the prism to move light spots of the second beam and the third beam on the exposure member to a position of a turning grating, thereby preparing the turning grating; and
blocking the third beam, exposing the exposure member to the first beam and the second beam passing through the prism, and adjusting the position of the prism to move light spots of the first beam and the second beam on the exposure member to a position of an out-coupling grating, thereby preparing the out-coupling grating.

In a preferred embodiment of the present application, the first beam-splitting member splits the light into a fourth beam, a fifth beam, a sixth beam, and a seventh beam, and the second beam-splitting member splits the light into an eighth beam and a ninth beam.

In a preferred embodiment of the present application, the fourth beam and the fifth beam are incident at different positions on the prism, the sixth beam and the seventh beam are incident at different positions on the prism, the fourth beam and the fifth beam are normally incident on the upper surface of the prism, the sixth beam and the seventh beam are normally incident on the first slanted face of the prism side, and the eighth beam and the ninth beam are normally incident on the second slanted face of the prism side.

In a preferred embodiment of the present application, the selectively exposing the exposure member to light normally incident on the prism to prepare the two-dimensional pupil expansion holographic waveguide sheet includes:
exposing the exposure member to the fourth beam and the eighth beam passing through the prism to form an in-coupling grating;
exposing the exposure member to the sixth beam and the ninth beam passing through the prism to form a turning grating; and
exposing the exposure member to the fifth beam and the seventh beam passing through the prism to form an out-coupling grating.

In a preferred embodiment of the present application, the exposure member is a holographic material.

Compared with the prior art, the embodiment of the present application provides a preparation method of a two-dimensional pupil expansion holographic waveguide sheet. A beam splitter and a reflector are arranged with centers thereof on the same straight line, and a prism is disposed below the beam splitter, where the front face and bottom face of the prism are planar structures, the side faces of the prism are slanted structures, and an exposure member is disposed at the bottom of the prism. A first beam-splitting member is disposed between the beam splitter and the prism, where reflected light from the beam splitter is split by the first beam-splitting member and normally incident on an upper surface of the prism and a first slanted face of the prism side, and transmitted light passing through the beam splitter is reflected by the reflector and normally incident on a second slanted face of the prism side. The exposure member selectively exposes the light normally incident on the prism to prepare the two-dimensional pupil expansion holographic waveguide sheet. The embodiment of the present application requires only a single optical path to complete the preparation of the in-coupling grating, turning grating, and out-coupling grating, obtaining the two-dimensional pupil expansion holographic waveguide sheet, effectively improving preparation efficiency and product yield, and facilitating large-scale production.

According to a second aspect, an embodiment of the present application further provides a two-dimensional pupil expansion holographic waveguide sheet, prepared by the preparation method according to any one of the first aspect.

According to a second aspect, an embodiment of the present application further provides AR glasses, including the two-dimensional pupil expansion holographic waveguide sheet according to the second aspect.

Compared with the prior art, the beneficial effects of the technical solutions provided by the second and third aspects of the embodiments of the present application are the same as those of the first aspect, and are not repeated here.

### BRIEF DESCRIPTION OF DRAWINGS

FIG. 1 is a schematic flowchart of a preparation method of a two-dimensional pupil expansion holographic waveguide sheet provided by the present invention.
FIG. 2 is a schematic structural diagram of preparing a two-dimensional pupil expansion waveguide sheet provided by the present invention.
FIG. 3 is a schematic structural diagram of preparing a two-dimensional pupil expansion waveguide sheet using a single optical path provided by the present invention.
FIG. 4 is a schematic structural diagram of preparing a two-dimensional pupil expansion waveguide sheet using a single optical path provided by the present invention.

The drawings described herein are provided for further understanding of the present application and constitute a part of the present application. The schematic embodiments and their descriptions are used to explain the present application and do not constitute an improper limitation of the present application. Some specific embodiments of the present application will be described in detail below with reference to the drawings in an exemplary but non-restrictive manner.

### DESCRIPTION OF EMBODIMENTS

To enable those skilled in the art to better understand the solutions of the present application, the technical solutions in the embodiments of the present application will be clearly and completely described below in conjunction with the drawings in the embodiments of the present application. It is apparent that the described embodiments are only a part of the embodiments of the present application, rather than all of them. Based on the embodiments in the present application, all other embodiments obtained by those of ordinary skill in the art without creative efforts shall fall within the protection scope of the present application.

Finally, it should be noted that the above embodiments are only used to illustrate the technical solutions of the present application, rather than to limit them. Although the present application has been described in detail with reference to the foregoing embodiments, those of ordinary skill in the art should understand that they can still modify the technical solutions described in the foregoing embodiments or perform equivalent replacements for some or all of the technical features. Such modifications or replacements do not cause the essence of the corresponding technical solutions to depart from the scope of the technical solutions of the embodiments of the present application.

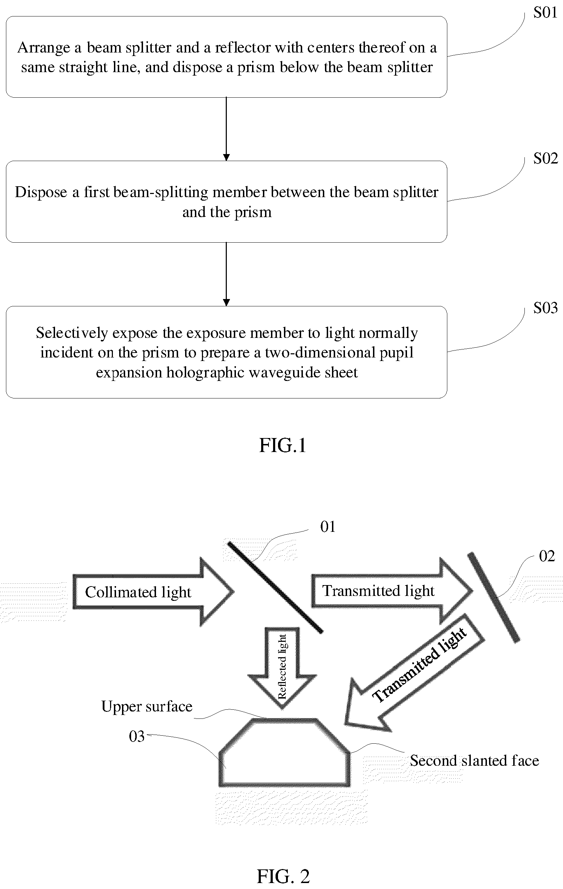

As shown in FIG. 1 and FIG. 2, an embodiment of the present application provides a preparation method of a two-dimensional pupil expansion holographic waveguide sheet, the method including:
Step SO1. Arrange a beam splitter 01 and a reflector 02 with centers thereof on a same straight line, and dispose a prism 03 below the beam splitter 01, where a front face and a bottom face of the prism 03 are planar structures and parallel to each other, side faces of the prism 03 are slanted structures, and an exposure member is disposed at the bottom of the prism 03.

Specifically, in the embodiment of the present application, the beam splitter 01 is a beamsplitter, the reflector 02 is a mirror, and the beamsplitter and the mirror are arranged at a certain tilt angle. After image light is incident on the beamsplitter, the beam splitter 01 splits the image light into reflected light and transmitted light. The prism 03 in the embodiment of the present application has specific structural requirements: the upper surface and lower surface of the prism 03 are planar structures and parallel to each other, and the side faces of the prism 03 are slanted structures. In specific embodiments, the prism 03 may be a conical structure. Setting the upper surface of the prism 03 as a planar structure allows the reflected light from the beamsplitter to be normally incident on the upper surface of the prism 03, and setting the side faces of the prism 03 as slanted structures allows the light reflected by the mirror to be normally incident on the slanted faces of the prism 03 side. This facilitates interference between the light incident on the slanted faces of the prism 03 and the light incident on the front face, enabling selective exposure on the exposure member.

Step S02. Dispose a first beam-splitting member 04 between the beam splitter 01 and the prism 03, where reflected light from the beam splitter 01 is split by the first beam-splitting member 04 and normally incident on an upper surface of the prism 03 and a first slanted face (not shown) of a prism side, and transmitted light passing through the beam splitter 01 is reflected by the reflector 02 and normally incident on a second slanted face of a prism 03 side.

Specifically, to achieve preparation of the in-coupling grating, turning grating, and out-coupling grating on the same optical path without optical interference, the first beam-splitting member 04 is disposed between the beam splitter 01 and the prism 03. The first beam-splitting member splits the light into a first beam and a second beam, and light reflected by the reflector 02 is a third beam. The first beam is normally incident on the upper surface of the prism 03, the first beam is normally incident on the first slanted face (not shown) of the prism 03 side, and the third beam is normally incident on the second slanted face of the prism 03 side.

Step S03. Selectively expose the exposure member to light normally incident on the prism 03 to prepare the two-dimensional pupil expansion holographic waveguide sheet.

Specifically, this includes: blocking the second beam, and exposing the exposure member to the first beam and the third beam passing through the prism 03 to prepare an in-coupling grating;
blocking the first beam, exposing the exposure member to the second beam and the third beam passing through the prism 03, and adjusting a position of the prism 03 to move light spots of the second beam and the third beam on the exposure member to a position of a turning grating, thereby preparing the turning grating; and
blocking the third beam, exposing the exposure member to the first beam and the second beam passing through the prism 03, and adjusting the position of the prism 03 to move light spots of the first beam and the second beam on the exposure member to a position of an out-coupling grating, thereby preparing the out-coupling grating.

In the embodiment of the present application, the exposure member is a holographic material.

In an embodiment of the present application, the method further includes:
disposing a second beam-splitting member 05 between the reflector 02 and the prism 03; and
splitting, by the second beam-splitting member 05, light reflected by the reflector 02 to be normally incident on the slanted face of the prism 03 side.

Specifically, the first beam-splitting member 04 splits the light into a fourth beam, a fifth beam, a sixth beam, and a seventh beam, and light reflected by the reflector 02 is split into an eighth beam and a ninth beam. The fourth beam and the fifth beam are incident at the same position on the prism 03, and the sixth beam and the seventh beam are incident at the same position on the prism 03.

Specifically, the fourth beam and the fifth beam are incident on the upper surface of the prism 03, the sixth beam and the seventh beam are normally incident on the first slanted face (not shown) of the prism 03 side, and the eighth beam and the ninth beam are normally incident on the second slanted face of the prism 03 side.

Selectively exposing the exposure member to light incident on the prism 03 to prepare the two-dimensional pupil expansion holographic waveguide sheet specifically includes:
exposing the exposure member to the fourth beam and the eighth beam passing through the prism 03 to form an in-coupling grating;
exposing the exposure member to the sixth beam and the ninth beam passing through the prism 03 to form a turning grating; and
exposing the exposure member to the fifth beam and the seventh beam passing through the prism 03 to form an out-coupling grating.

The technical solutions of the present application are described in detail below with specific examples:

### Example 1

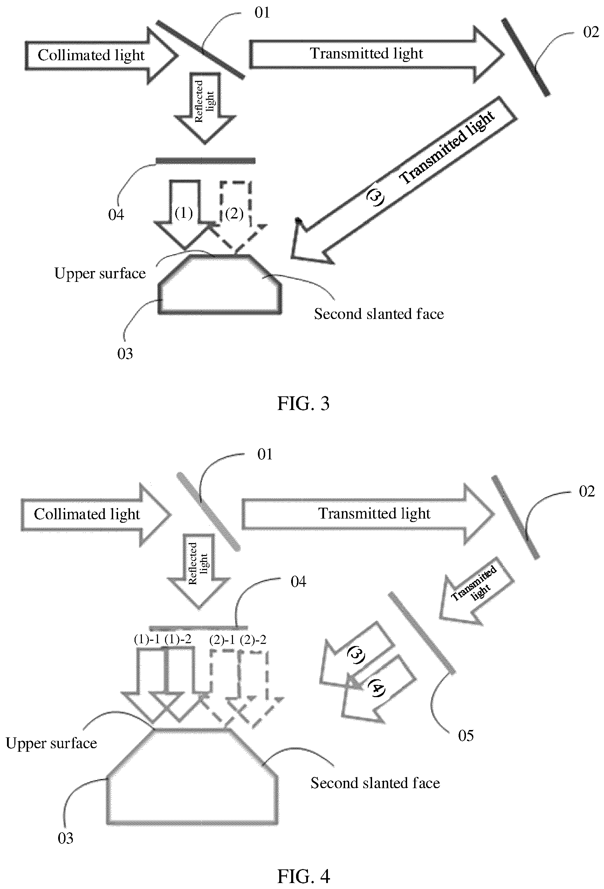

As shown in FIG. 3, an exposure optical path is set up, using only a single optical path, and different gratings are prepared through three exposures by switching optical components, forming a two-dimensional pupil expansion holographic waveguide sheet.

The optical path shown in FIG. 3 can prepare three different gratings to obtain a two-dimensional pupil expansion holographic waveguide sheet. Upon reaching the beam splitter 01, the light beam is split into two beams. The reflected light is further split by the first beam-splitting member 04 into a first beam (1) and a second beam (2), where the first beam (1) is normally incident on the upper surface of the prism 03, and the second beam (2) is normally incident on the first slanted face (not shown) of the prism 03 side. The collimated light, after passing through the beam splitter 01, forms a third beam (transmitted light) (3), which is normally incident on the second slanted face of the specially designed prism 03 side after reflected by the reflector 02. The prism 03 is placed on a lifting platform, which has two-dimensional translation functionality on the optical platform. When preparing the in-coupling grating, the first beam (1) and the third beam (3) interfere on the holographic material plane after passing through the prism 03. The second beam (2) was blocked, a diaphragm was set on the corresponding optical path to modulate the interference area to the designed size (in actual preparation, to avoid an overly large in-coupling grating occupying the lens area, it is set smaller, with a diameter or side length generally between 5 mm and 30 mm), and the in-coupling grating was prepared. When preparing the turning grating, the second beam (2) and the third beam (3) interfere on the holographic material plane after passing through the prism 03. The first beam (1) was blocked, and a diaphragm was set on the corresponding optical path to modulate the interference area to the designed size (the turning grating is generally rectangular or trapezoidal in shape, and the present application does not limit the shape of the turning grating, with a length and width range generally between 10 mm × 5 mm and 70 mm × 30 mm). The position of the lifting platform was moved to shift the interference spot to the designed position of the turning grating, and the corresponding turning grating was prepared (the designated position is the position of the turning grating in the entire waveguide sheet as per the design drawing; by moving the two-dimensional translation platform, the lifting platform drives the prism 03 to move, the holographic material is attached to the prism 03, and as the prism 03 moves, the interference position of the two beams changes. When the interference position reaches the designed position on the holographic material, exposure can be performed). When preparing the out-coupling grating, the first beam (1) and the second beam (2) interfere on the holographic material plane after passing through the prism 03. The third beam (3) was blocked, and a diaphragm was set on the corresponding optical path to modulate the interference area to the designed size. The position of the lifting platform was moved to shift the interference spot to the designed position of the out-coupling grating, and the out-coupling grating was prepared (similar to exposing the turning grating, by moving the two-dimensional translation platform and lifting the lifting platform, the interference position of the two beams reaches the designed position on the holographic material, enabling exposure). In summary, by moving the position of the lifting platform and blocking the optical path, a two-dimensional pupil expansion holographic waveguide sheet can be prepared on the same exposure optical path.

### Example 2

As shown in FIG. 4, an exposure optical path is set up, using a single optical path, and a single exposure simultaneously obtains the in-coupling grating, turning grating, and out-coupling grating, forming a two-dimensional pupil expansion holographic waveguide sheet.

The optical path shown in FIG. 4 enables the preparation of a two-dimensional pupil expansion holographic waveguide sheet with a single exposure. Upon reaching the beamsplitter, the light beam is split into two beams, where the reflected light is further split by the beam-splitting device into a fourth beam (1)-1, a fifth beam (1)-2, a sixth beam (2)-1, and a seventh beam (2)-2. The fourth beam (1)-1 and the fifth beam (1)-2 are perpendicular to the upper surface of the prism 03, with different incident positions on the prism 03. The sixth beam (2)-1 and the seventh beam (2)-2 are incident on the second slanted face of the prism 03, with different incident positions on the prism 03. During beam exposure, the fourth beam (1)-1 and the seventh beam (3) interfere on the holographic material plane after passing through the prism 03, forming the in-coupling grating; the sixth beam (2)-1 and the ninth beam (4) interfere on the holographic material plane after passing through the prism 03, forming the turning grating; and the fifth beam (1)-2 and the sixth beam (2)-2 interfere on the holographic material plane after passing through the prism 03, forming the out-coupling grating. The positions of the gratings are determined by the interference positions of the different beams, and sizes of the gratings are determined by the diaphragms on the respective optical paths. In summary, this optical path enables the preparation of a two-dimensional pupil expansion holographic waveguide sheet through a single exposure.

According to a second aspect, an embodiment of the present application further provides a two-dimensional pupil expansion holographic waveguide sheet, prepared by the preparation method according to any one of the first aspect.

According to a second aspect, an embodiment of the present application further provides AR glasses, including the two-dimensional pupil expansion holographic waveguide sheet according to the second aspect.

Compared with the prior art, the beneficial effects of the technical solutions provided by the second and third aspects of the embodiments of the present application are the same as those of the first aspect, and are not repeated here.

Finally, it should be noted that the above embodiments are only used to illustrate the technical solutions of the present application, rather than to limit them. Although the present application has been described in detail with reference to the foregoing embodiments, those of ordinary skill in the art should understand that they can still modify the technical solutions described in the foregoing embodiments or perform equivalent replacements for some or all of the technical features. Such modifications or replacements do not cause the essence of the corresponding technical solutions to depart from the scope of the technical solutions of the embodiments of the present application.

## Claims

1. A preparation method of a two-dimensional pupil expansion holographic waveguide sheet, wherein the method comprises:
arranging a beam splitter and a reflector with centers thereof on a same straight line, and disposing a prism below the beam splitter, wherein a front face and a bottom face of the prism are planar structures and parallel to each other, side faces of the prism are slanted structures, and an exposure member is disposed at the bottom of the prism;
disposing a first beam-splitting member between the beam splitter and the prism, wherein reflected light from the beam splitter is split by the first beam-splitting member and normally incident on an upper surface of the prism and a first slanted face of a prism side, and transmitted light passing through the beam splitter is reflected by the reflector and normally incident on a second slanted face of a prism side; and
selectively exposing the exposure member to light normally incident on the prism to prepare the two-dimensional pupil expansion holographic waveguide sheet.

2. The preparation method of a two-dimensional pupil expansion holographic waveguide sheet according to claim 1, wherein the method further comprises:
disposing a second beam-splitting member between the reflector and the prism; and
splitting, by the second beam-splitting member, light reflected by the reflector to be normally incident on the second slanted face of the prism side.

3. The preparation method of a two-dimensional pupil expansion holographic waveguide sheet according to claim 1, wherein the first beam-splitting member splits the light into a first beam and a second beam, the light reflected by the reflector is a third beam, the first beam is normally incident on the upper surface of the prism, the first beam is normally incident on the first slanted face of the prism side, and the third beam is normally incident on the second slanted face of the prism side.

4. The preparation method of a two-dimensional pupil expansion holographic waveguide sheet according to claim 3, wherein the selectively exposing the exposure member to light normally incident on the prism to prepare the two-dimensional pupil expansion holographic waveguide sheet comprises:
blocking the second beam, and exposing the exposure member to the first beam and the third beam passing through the prism to prepare an in-coupling grating;
blocking the first beam, exposing the exposure member to the second beam and the third beam passing through the prism, and adjusting a position of the prism to move light spots of the second beam and the third beam on the exposure member to a position of a turning grating, thereby preparing the turning grating; and
blocking the third beam, exposing the exposure member to the first beam and the second beam passing through the prism, and adjusting the position of the prism to move light spots of the first beam and the second beam on the exposure member to a position of an out-coupling grating, thereby preparing the out-coupling grating.

5. The preparation method of a two-dimensional pupil expansion holographic waveguide sheet according to claim 2, wherein the first beam-splitting member splits the light into a fourth beam, a fifth beam, a sixth beam, and a seventh beam, and the second beam-splitting member splits the light into an eighth beam and a ninth beam.

6. The preparation method of a two-dimensional pupil expansion holographic waveguide sheet according to claim 5, wherein the fourth beam and the fifth beam are incident at different positions on the prism, the sixth beam and the seventh beam are incident at different positions on the prism, the fourth beam and the fifth beam are normally incident on the upper surface of the prism, the sixth beam and the seventh beam are normally incident on the first slanted face of the prism side, and the eighth beam and the ninth beam are normally incident on the second slanted face of the prism side.

7. The preparation method of a two-dimensional pupil expansion holographic waveguide sheet according to claim 6, wherein the selectively exposing the exposure member to light normally incident on the prism to prepare the two-dimensional pupil expansion holographic waveguide sheet comprises:
exposing the exposure member to the fourth beam and the eighth beam passing through the prism to form an in-coupling grating;
exposing the exposure member to the sixth beam and the ninth beam passing through the prism to form a turning grating; and
exposing the exposure member to the fifth beam and the seventh beam passing through the prism to form an out-coupling grating.

8. The preparation method of a two-dimensional pupil expansion holographic waveguide sheet according to any one of claims 1 to 7, wherein the exposure member is a holographic material.

9. A two-dimensional pupil expansion holographic waveguide sheet, prepared by the preparation method according to any one of claims 1 to 8.

10. AR glasses, comprising the two-dimensional pupil expansion holographic waveguide sheet according to claim 9.
